# EUROPEAN PATENT SPECIFICATION

(11) **EP 1 985 479 B1**
(45) Date of publication and mention of the grant of the patent: **24.11.2010**
(21) Application number: 08007940.3
(22) Date of filing: 24.04.2008
(51) Int. Cl.: B60H 1/00

(54) **Condition monitoring apparatus for vehicle passenger compartment**
Betriebszustandsüberwachung für Fahrzeugpassagierräume
Appareil de surveillance de condition pour compartiment passager d'un véhicule

(30) Priority: 27.04.2007 JP 2007119678
(43) Date of publication of application: 29.10.2008
(73) Proprietor: Toyota Boshoku Kabushiki Kaisha, Kariya-shi, Aichi-ken 448-8651 (JP)
(72) Inventor: Iida, Kenji, Kariya-shi Aichi-ken 448-8651 (JP); Sakuma, Wataru, Kariya-shi Aichi-ken 448-8651 (JP)
(74) Representative: Banzer, Hans-Jörg

(56) References cited:
- DE-A1- 10 259 973
- DE-A1- 10 348 164
- DE-A1-102004 019 929
- DE-B3- 10 318 504
- FR-A- 2 691 677

## Description

The present invention relates to a condition monitoring apparatus for a vehicle passenger compartment that monitors an increase in the concentration of carbon dioxide in a vehicle passenger compartment when the engine switch is OFF, warns an occupant, and ventilate the passenger compartment. The engine switch refers to a device for starting and stopping an internal combustion engine, an electric motor, or an engine system that includes an internal combustion engine and an electric motor.

Conventionally, Japanese Laid-Open Patent Publication No. 2000-71752 discloses an air conditioner that, when the concentration of carbon dioxide increases in the passenger compartment of a vehicle, introduces the outside air into the passenger compartment, thereby lowering the carbon dioxide concentration. That is, when the concentration of carbon dioxide detected by a carbon dioxide sensor reaches a predetermined discomfort concentration range, the air conditioner switches its suction mode from an internal circulation mode to an outside air introducing mode or to an inside air/outside air introducing mode. Accordingly, the outside air is forcedly drawn into the passenger compartment, so that the carbon dioxide concentration in the passenger compartment is lowered. When the carbon dioxide concentration reaches a dangerous concentration range, which is higher than the discomfort concentration range, the air conditioner opens the windows and gives a warning to the occupant after switching to the outside air introducing mode.

If an occupant remains in a passenger compartment when the engine is not running, respiration of the occupant raises the concentration of carbon dioxide in the passenger compartment. This causes the condition of the passenger compartment to deteriorate.

However, in the state where the ignition switch is OFF and the engine and the air conditioning devices are not operating, the air conditioner of Japanese Laid-Open Patent Publication No. 2000-71752 cannot lower the thus increased concentration of carbon dioxide in the passenger compartment.

Document DE 103 48 164, which is considered as the closest prior art, further discloses a condition monitoring apparatus for a vehicle passenger compartment that is capable of preventing carbon dioxide concentration to increase when the engine is OFF.

The present invention was made for solving the above problems in the prior art. Accordingly, it is an objective of the present invention to provide an improved condition monitoring apparatus for a vehicle passenger compartment that is capable of preventing carbon dioxide in a vehicle passenger compartment from increasing in a state where the engine switch is OFF.

According to the present invention, this object is achieved by a condition monitoring apparatus for a vehicle passenger compartment as defined by any one of claims 1-3. The dependent claims define preferred and advantageous embodiments.

To achieve the foregoing objective and in accordance with a first aspect of the present invention, a condition monitoring apparatus for a vehicle passenger compartment as shown below is provided. The condition monitoring apparatus for a vehicle passenger compartment includes: occupant detection means that detect whether an occupant is present in the passenger compartment; carbon dioxide concentration detection means that detect a concentration of carbon dioxide in the passenger compartment; warning means that give a warning; wherein the occupant detection means determine whether an occupant is present in the passenger compartment if an increase rate per unit time of the carbon dioxide concentration detected by the carbon dioxide concentration detection means is greater than an increase rate threshold value monitoring control means are provided, wherein, when the engine switch is OFF and the occupant detection means detect that an occupant is present, the monitoring control means determine whether the carbon dioxide concentration detected by the carbon dioxide concentration detection means is greater than a reference value, and wherein, if the carbon dioxide concentration is greater than the reference value, the monitoring control means cause the warning means to give a warning.

According to this configuration, if an occupant is present in a vehicle passenger compartment when the engine switch is OFF so that the engine is not operating and air conditioning devices are stopped, it is possible to give a warning to the occupant that the condition in the passenger compartment has deteriorated due to an increase in carbon dioxide. It is therefore possible to urge the occupant to deal with the deteriorated condition, for example, by opening the windows to ventilate the passenger compartment.

In accordance with a second aspect of the present invention, a condition monitoring apparatus for a vehicle passenger compartment as shown below is provided. The condition monitoring apparatus for a vehicle passenger compartment includes: occupant detection means that detect whether an occupant is present in the passenger compartment; carbon dioxide concentration detection means that detect a concentration of carbon dioxide in the passenger compartment; ventilation means that ventilate the passenger compartment; wherein the occupant detection means determine whether an occupant is present in the passenger compartment if an increase rate per unit time of the carbon dioxide concentration is greater than an increase rate threshold value monitoring control means are provided, wherein, when the engine switch is OFF and the occupant detection means detect that an occupant is present, the monitoring control means determine whether the carbon dioxide concentration detected by the carbon dioxide concentration detection means is greater than a reference value, and wherein, if the carbon dioxide concentration is greater than the reference value, the monitoring control means cause the ventilation means to ventilate the passenger compartment.

According to this configuration, if an occupant is present in a vehicle passenger compartment when the engine switch is OFF so that the engine is not operating and air conditioning devices are stopped, it is possible to prevent the condition in the passenger compartment from deteriorating due to an increase in carbon dioxide through ventilation.

In accordance with a third aspect of the present invention, a condition monitoring apparatus for a vehicle passenger compartment as shown below is provided. The apparatus includes: occupant detection means that detect whether an occupant is present in the passenger compartment; carbon dioxide concentration detection means that detect a concentration of carbon dioxide in the passenger compartment; warning means that give a warning; and ventilation means that ventilate the passenger compartment; wherein the occupant detection means determine whether an occupant is present in the passenger compartment if an increase rate per unit time of the carbon dioxide concentration is greater than an increase rate threshold value monitoring control means are provided, wherein, when the engine switch is OFF and the occupant detection means detect that an occupant is present, the monitoring control means determine whether the carbon dioxide concentration detected by the carbon dioxide concentration detection means is greater than a reference value, and wherein, if the carbon dioxide concentration is greater than the reference value, the monitoring control means cause the warning means to emit sound, and cause the ventilation means to ventilate the passenger compartment.

According to this configuration, if an occupant is present in a vehicle passenger compartment when the engine switch is OFF so that the engine is not operating and air conditioning devices are stopped, it is possible to give a warning to the occupant that the condition in the passenger compartment has deteriorated due to an increase in carbon dioxide and to prevent such a condition through ventilation.

Other aspects and advantages of the invention will become apparent from the following description, taken in conjunction with the accompanying drawings, illustrating by way of example the principles of the invention.

The features of the present invention that are believed to be novel are set forth with particularity in the appended claims. The invention, together with objects and advantages thereof, may best be understood by reference to the following description of the presently preferred embodiments together with the accompanying drawings in which:
Fig. 1 is a diagrammatic view showing a vehicle having a condition monitoring apparatus for a vehicle passenger compartment according to a first embodiment;
Fig. 2 is a block diagram showing the monitoring apparatus;
Fig. 3 is a flowchart showing a monitoring process;
Fig. 4 is a block diagram showing a condition monitoring apparatus for a vehicle passenger compartment according to a second embodiment; and
Fig. 5 is a flowchart showing a monitoring process.

### (First Embodiment)

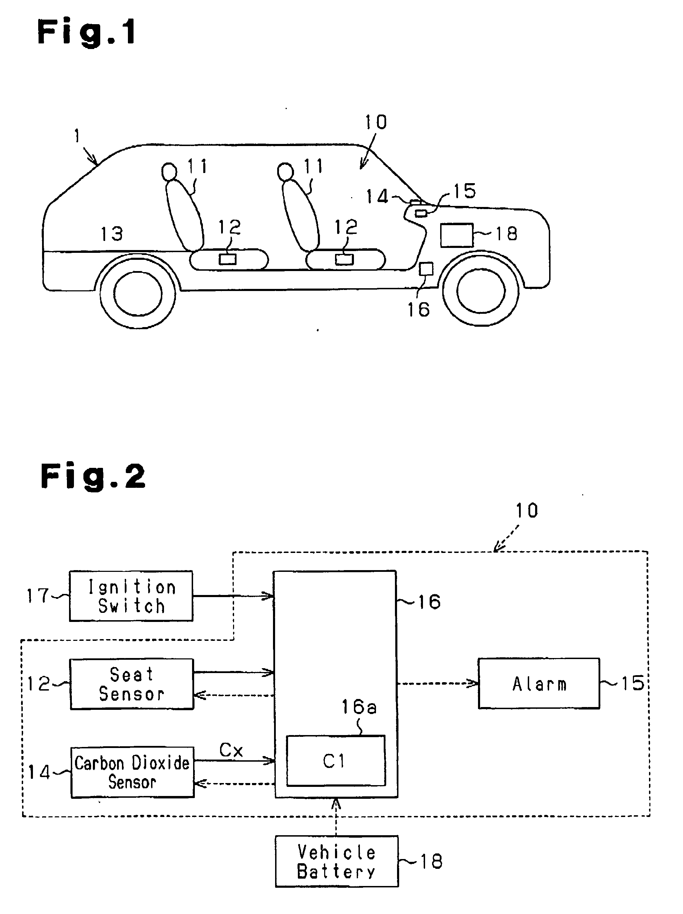

A condition monitoring apparatus 10 for a vehicle passenger compartment according to a first embodiment of the present invention will now be described with reference to Figs. 1 to 3.

As shown in Fig. 1, the condition monitoring apparatus 10 is provided in a vehicle 1, and includes seat sensors 12 located in seats 11, a carbon dioxide sensor 14 and an alarm 15 provided in a passenger compartment 13, and a monitoring control device 16 located in the vehicle body. The alarm 15 includes a buzzer and a display lamp. In the present embodiment, the seat sensors 12 correspond to occupant detection means, the carbon dioxide sensor 14 corresponds to carbon dioxide concentration detection means, and the alarm 15 corresponds to warning means. The monitoring control device 16 corresponds to monitoring control means and device control means.

As shown in Fig. 2, the seat sensors 12 detect whether an occupant is seated on any of the seats 11 and send detection signals to the monitoring control device 16. The carbon dioxide sensor 14 detects the concentration of carbon dioxide in the passenger compartment 13, and sends a detection signal to the monitoring control device 16. The monitoring control device 16 receives a switching signal from an ignition switch 17. The ignition switch 17 is switched among an OFF position for putting the engine and accessories such as a car stereo in OFF state, an ACC ON position for activating the accessories, an engine ON position, and a start position. At the engine ON position, the engine is operated, and electricity is supplied to electric devices including an air conditioner. At the OFF position, the engine is stopped, and the electricity supply to the electric devices including the air conditioner is stopped. The alarm 15 is activated by an activation current sent from the monitoring control device 16 to give a warning to occupants in the passenger compartment 13.

The monitoring control device 16 always receives electricity from a vehicle battery 18 regardless of the position of the ignition switch 17. The seat sensors 12, the carbon dioxide sensor 14, and the alarm 15 receive electricity of the vehicle battery 18 through the monitoring control device 16.

The monitoring control device 16 is a microcomputer that has a memory section 16a. The memory section 16a stores a control program for a performing monitoring process, in which the output of the control signal to the alarm 15 is controlled based on detection signals from the seat sensors 12, the detection signal from the carbon dioxide sensor 14, and the switching signal from the ignition switch 17. Further, the memory section 16a stores a carbon dioxide concentration threshold value C1 for determining in the monitoring process deterioration of the condition of the passenger compartment 13 caused by an increase in carbon dioxide.

Based on detection signals from the seat sensors 12, the monitoring control device 16 detects whether an occupant is present in the passenger compartment 13. Based on a detection signal from the carbon dioxide sensor 14, the monitoring control device 16 detects the carbon dioxide concentration Cx in the passenger compartment 13. The monitoring control device 16 determines whether the ignition switch 17 is at OFF position based on a switching signal from the ignition switch 17. Further, the monitoring control device 16 compares the detection value of the carbon dioxide concentration Cx with the concentration threshold value C1. Based on whether there is an occupant in the passenger compartment 13, the switching signal of the ignition switch 17, and the result of the comparison, the monitoring control device 16 determines whether the condition of the passenger compartment 13 has deteriorated due to an increase in the carbon dioxide. When determining that the condition of the passenger compartment 13 has deteriorated, the monitoring control device 16 outputs an activation current to activate the alarm 15.

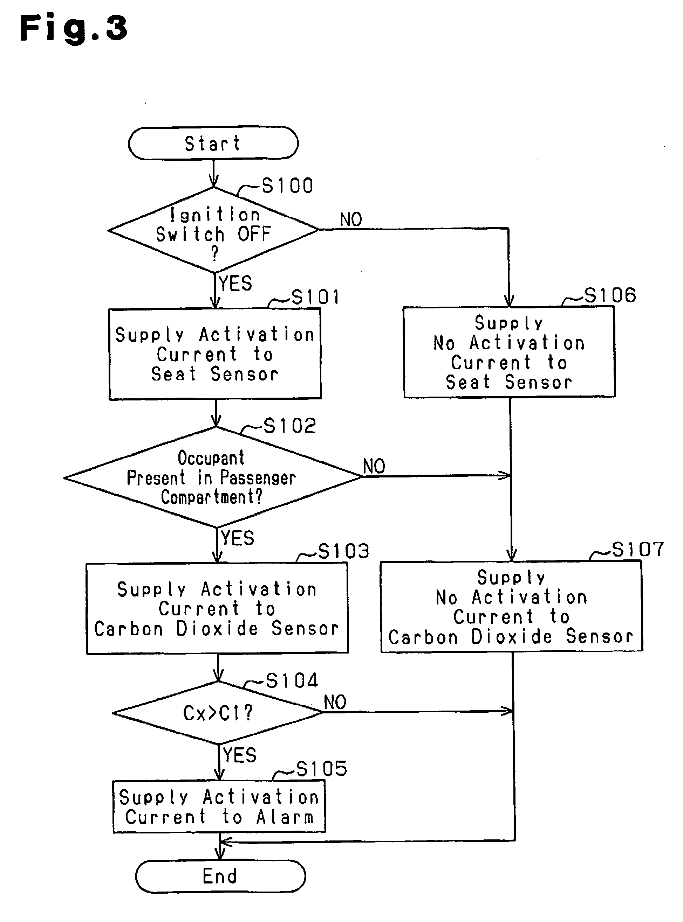

The monitoring control device 16 executes the process of the flowchart shown in Fig. 3 as the monitoring process in an interrupting manner at every predetermined interval.

First, whether the ignition switch 17 is OFF is determined based on a switching signal from the ignition switch 17 at step (hereinafter, abbreviated as S) 100 in the monitoring process. If the switching signal indicates the OFF state, S101 is executed.

At S101, an activation current is supplied to the seat sensors 12. Then, S102 is executed.

At step S102, whether any occupant is seated on any of the seats 11 is determined based on detection signals from the seat sensors 12. When a seated occupant is detected, it is determined that the occupant exists in the passenger compartment 13. Then, S103 is executed.

At S103, an activation current is supplied to the carbon dioxide sensor 14. Then, S104 is executed.

At S104, the carbon dioxide concentration Cx in the passenger compartment 13 is detected based on a detection signal from the carbon dioxide sensor 14, and whether the carbon dioxide concentration Cx is greater than the concentration threshold value C1 is determined.

At S104, if the carbon dioxide concentration Cx is greater than the concentration threshold value C1, S105 is executed. At S105, an activation current is supplied to the alarm 15 to give a warning to the occupant in the passenger compartment 13 that the increase in carbon dioxide has degraded the condition of the passenger compartment 13.

On the other hand, if it is determined that the ignition switch 17 is not OFF at S101, S106 is executed. At S106, no activation current is supplied to the seat sensors 12. If it is determined that no occupant is present in the passenger compartment at S102, S107 is executed. At S107, no activation current is supplied to the carbon dioxide sensor 14.

If an occupant keeps staying in the passenger compartment 13 with the ignition switch 17 OFF and the windows closed, the carbon dioxide concentration Cx in the passenger compartment 13 increases. When the carbon dioxide concentration Cx in the passenger compartment 13 has reached a level that causes discomfort to the occupant, the monitoring control device 16 activates the alarm 15 at S105 to give a warning to the occupant. This allows the occupant to open windows or doors, or exit the vehicle, so as to avoid the unpleasant condition.

The above embodiment provides the following advantages.
(1) Even if the ignition switch 17 is OFF and the engine is not running, the monitoring control device 16 determines whether an occupant is present in the passenger compartment 13 based on a detection signal from the seat sensors 12, and detects the carbon dioxide concentration Cx in the passenger compartment 13 based on a detection signal from the carbon dioxide sensor 14. Then, the monitoring control device 16 determines whether the carbon dioxide concentration Cx is greater than the concentration threshold value C1. When determining that the condition of the passenger compartment 13 has deteriorated, the monitoring control device 16 activates the alarm 15 to give a warning to the occupant.
   As described above, when an occupant continues staying in the passenger compartment 13 of the vehicle 1 in the state where the ignition switch 17 is OFF, and the engine and the air conditioning devices are not running, deterioration of the condition of the passenger compartment 13 due to increase in carbon dioxide can be monitored. If such deterioration is detected, a warning is given to the occupant.
(2) When detecting an occupant in the passenger compartment 13 based on a detection signal from the seat sensors 12, the monitoring control device 16 supplies electricity to the carbon dioxide sensor 14 so that the carbon dioxide sensor 14 detects the carbon dioxide concentration Cx. Therefore, when no occupant is present in the passenger compartment 13, electricity is not wastefully supplied to the carbon dioxide sensor 14, so that wasteful consumption of the electricity of the vehicle battery 18 is prevented.

### (Second Embodiment)

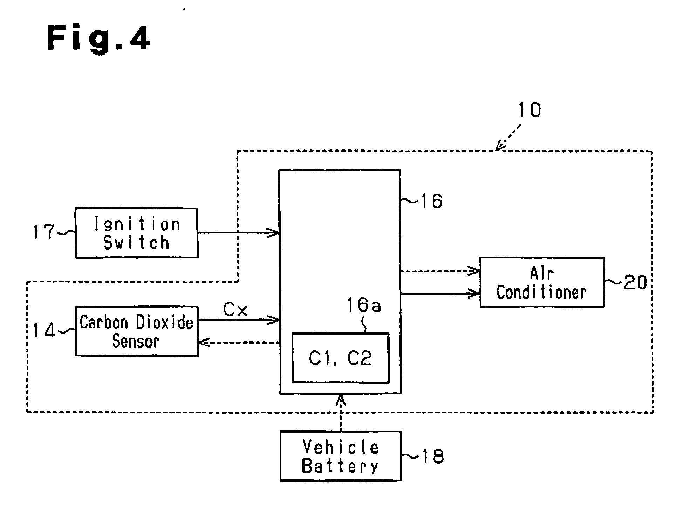

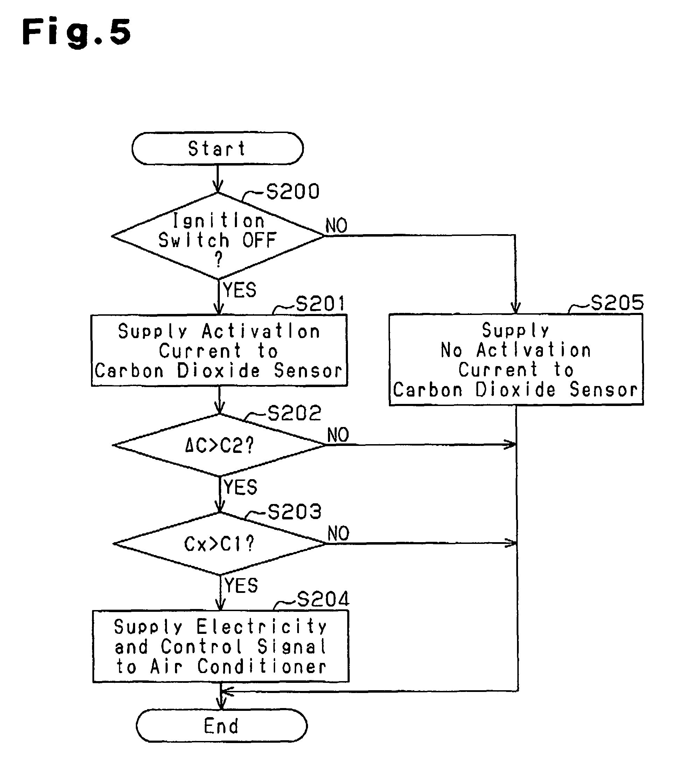

A second embodiment of the present invention will now be described with reference to Figs. 4 and 5. Difference from the first embodiment will mainly be discussed.

A condition monitoring apparatus 10 according to this embodiment has a carbon dioxide sensor 14, a monitoring control device 16, and an air conditioner 20 as shown in Fig. 4. In this embodiment, no seat sensors 12 are provided, and the carbon dioxide sensor 14 and the monitoring control device 16 correspond to occupant detection means. The monitoring control device 16 corresponds to monitoring control means, and the air conditioner 20 corresponds to ventilation means.

The air conditioner 20 is a combination of a refrigeration circuit for cooling air and an air blower system for drawing the outside air into the passenger compartment 13 and for circulating air within the passenger compartment 13. Based on a control signal from the monitoring control device 16, a control device (not shown) of the air conditioner 20 operates a blower for a given length of time in the outside air introducing mode of the air blower system.

The monitoring control device 16 has a memory section 16a. The memory section 16a stores a control program for a performing monitoring process, in which the output of the control signal to the alarm 15 is controlled based on the detection signal from the carbon dioxide sensor 14, and a switching signal from the ignition switch 17. In addition to the concentration threshold value C1, the memory section 16a stores an increase rate threshold value C2, which is used in the monitoring process to detect whether an occupant is present in the passenger compartment 13 based on an increase rate of the carbon dioxide concentration Cx per unit time.

That is, based on detection signals continuously supplied from the carbon dioxide sensor 14, the monitoring control device 16 detects whether an occupant is present in the passenger compartment 13. Further, the monitoring control device 16 compares the current detection value of the carbon dioxide concentration Cx with the determination threshold value C1. Based on whether there is an occupant in the passenger compartment 13, the switching signal, and the result of the comparison, the monitoring control device 16 determines whether the condition of the passenger compartment 13 has deteriorated due to an increase in the carbon dioxide. When it is determined that the condition of the passenger compartment 13 has deteriorated, the electricity of the vehicle battery 18 is supplied to the air blower system.

The monitoring control device 16 executes the process of the flowchart shown in Fig. 5 as the monitoring process in an interrupting manner at every predetermined interval.

First, whether the ignition switch 17 is OFF is determined based on a switching signal from the ignition switch 17 at S200 in this monitoring process. If the switching signal indicates the OFF state, S201 is executed.

At S201, an activation current is supplied to the carbon dioxide sensor 14. Then, S202 is executed.

At S202, the carbon dioxide concentration Cx in the passenger compartment 13 is detected based on a detection signal from the carbon dioxide sensor 14. Then, the carbon dioxide concentration Cx detected in the current cycle is compared with the carbon dioxide concentration Cx detected in the previous cycle of interruption, so that an increase rate ΔC of the carbon dioxide concentration Cx per unit time is obtained. Then, whether the increase rate ΔC of the carbon dioxide concentration Cx has exceeded the increase rate threshold value C2 is determined. If the increase rate ΔC is greater than the increase rate threshold value C2, it is determined that an occupant is present in the passenger compartment 13.

Then, whether the current carbon dioxide concentration Cx is greater than the concentration threshold value C1 at S203 is determined.

If the carbon dioxide concentration Cx is greater than the concentration threshold value C1 at S203, S204 is executed. At S204, electricity and a control signal are supplied to the air conditioner 20. Thus, in the air conditioner 20, the air blower system is set to the outside air introducing mode and operated for a given length of time. As a result, the outside air is forcedly drawn into the passenger compartment 13, so that the carbon dioxide concentration Cx is lowered.

On the other hand, if it is determined that the ignition switch 17 is not OFF at S201, S205 is executed. At S205, no activation current is supplied to the carbon dioxide sensor 14.

The second embodiment operates in the same manner as the first embodiment.

In addition to the advantage of item (1) of the first embodiment, the second embodiment provides the following advantage.
(3) The monitoring control device 16 obtains the increase rate ΔC per unit time of the carbon dioxide concentration Cx based on the detection signal of the carbon dioxide sensor 14, and detects the presence of an occupant in the passenger compartment 13 based on the increase rate ΔC. Therefore, no sensor for detecting the presence of an occupant in the passenger compartment 13 is required other than the carbon dioxide sensor 14. This simplifies the configuration.

### (Other Embodiments)

The above described embodiments may be modified as described below.

In the first embodiment, the alarm 15 may be configured to give a warning to the outside of the vehicle. This configuration is suitable for cases where an infant is present in the vehicle.

The warning means may be a device that is capable of giving a warning to an occupant in a tactile manner, such as a vibrator. This configuration is capable of warning a sleeping occupant of an increase in the carbon dioxide concentration Cx.

Alternatively, the warning means may be a portable device that receives a wireless signal indicating an abnormality of the vehicle from an on-board monitoring device in an antitheft system. That is, an increase in the carbon dioxide concentration Cx in the passenger compartment 13 is informed to the driver using the portable device.

The occupant detection means may be an infrared radiation sensor or an ultrasonic sensor that detect the body of an occupant.

The occupant detection means may be formed by a portable device of a keyless entry/start system, an on-board device of the system, and a monitoring control device that receives a portable device detection signal from the on-board device. That is, it is determined that an occupant is present in the passenger compartment 13 when the existence of the portable device in the passenger compartment 13 is detected.

In the monitoring process according to the first embodiment, when the ignition switch 17 is OFF, an activation current may be supplied to the carbon dioxide sensor 14 before the existence of an occupant in the passenger compartment 13 is detected.

In the first and second embodiments, switching of the ignition switch 17 from ON to OFF may be detected, and the monitoring process may be executed when a predetermined period has elapsed from the switching. In this case, the monitoring process is prevented from executed unnecessarily when, even though an occupant is present, the ignition switch 17 has just been turned OFF and therefore the carbon dioxide concentration Cx is low. Accordingly, the electricity of the battery 18 is not consumed wastefully.

The ventilation means may be a power window system. In this case, the power window system opens a side window in response to an activation signal from the monitoring control device 16.

The present invention may be applied to a hybrid vehicle that operates using an engine and an electric motor separately or simultaneously. The present invention may also be applied to an electric vehicle that operates using only an electric motor.

## Claims

1. A condition monitoring apparatus (10) for a vehicle passenger compartment (13), comprising:
occupant detection means (12) that detect whether an occupant is present in the passenger compartment (13);
carbon dioxide concentration detection means (14) that detect a concentration (Cx) of carbon dioxide in the passenger compartment (13); and
warning means (15) that give a warning,
**characterized in that**
the occupant detection means (12) determine whether an occupant is present in the passenger compartment (13) if an increase rate per unit time of the carbon dioxide concentration (Cx) detected by the carbon dioxide concentration detection means (14) is greater than an increase rate threshold value (C2); and
monitoring control means (16) are provided, wherein, when an engine switch (17) of the vehicle is OFF and the occupant detection means (12) detect that an occupant is present, the monitoring control means (16) determine whether the carbon dioxide concentration (Cx) detected by the carbon dioxide concentration detection means (14) is greater than a reference value (C1), and wherein, if the carbon dioxide concentration (Cx) is greater than the reference value (C1), the monitoring control means (16) cause the warning means (15) to give a warning.

2. A condition monitoring apparatus (10) for a vehicle passenger compartment (13), comprising:
occupant detection means (12) that detect whether an occupant is present in the passenger compartment (13);
carbon dioxide concentration detection means (14) that detect a concentration (Cx) of carbon dioxide in the passenger compartment (13); and
ventilation means (20) that ventilate the passenger compartment (13),
**characterized in that**
the occupant detection means (12) determine whether an occupant is present in the passenger compartment (13) if an increase rate per unit time of the carbon dioxide concentration (Cx) detected by the carbon dioxide concentration detection means (14) is greater than an increase rate threshold value (C2); and
monitoring control means (16) are provided, wherein, when an engine switch (17) is OFF and the occupant detection means (12) detect that an occupant is present, the monitoring control means (16) determine whether the carbon dioxide concentration (Cx) detected by the carbon dioxide concentration detection means (14) is greater than a reference value (C1), and wherein, if the carbon dioxide concentration (Cx) is greater than the reference value (C1), the monitoring control means (16) cause the ventilation means (20) to ventilate the passenger compartment (13).

3. A condition monitoring apparatus (10) for a vehicle passenger compartment (13), comprising:
occupant detection means (12) that detect whether an occupant is present in the passenger compartment (13);
carbon dioxide concentration detection means (14) that detect a concentration (Cx) of carbon dioxide in the passenger compartment (13);
warning means (15) that give a warning; and
ventilation means (20) that ventilate the passenger compartment (13),
**characterized in that**
the occupant detection means (12) determine whether an occupant is present in the passenger compartment (13) if an increase rate per unit time of the carbon dioxide concentration (Cx) detected by the carbon dioxide concentration detection means (14) is greater than an increase rate threshold value (C2); and
monitoring control means (16) are provided, wherein, when an engine switch (17) is OFF and the occupant detection means (12) detect that an occupant is present, the monitoring control means (16) determine whether the carbon dioxide concentration (Cx) detected by the carbon dioxide concentration detection means (14) is greater than a reference value (C1,C2), and wherein, if the carbon dioxide concentration (Cx) is greater than the reference value (C1,C2), the monitoring control means (16) cause the warning means (15) to emit sound, and cause the ventilation means (20) to ventilate the passenger compartment (13).

4. The condition monitoring apparatus (10) for a vehicle passenger compartment (13) according to any one of claims 1 to 3, **characterized by** device control means that activate the carbon dioxide concentration detection means (14) when the occupant detection means (12) detect that an occupant is present.

## Patentansprüche

1. Zustandserfassungsvorrichtung (10) für einen Insassenteilraum (13) eines Fahrzeugs, umfassend:
Insassenerfassungsmittel (12), welche erfassen, ob ein Insasse in dem Insassenteilraum (13) vorhanden ist;
Mittel (14) zur Erfassung der Kohlendioxydkonzentration, welche eine Konzentration (Cx) von Kohlendioxyd in dem Insassenteilraum (13) erfassen; und
Warnmittel (15), welche eine Warnung ausgeben,
**dadurch gekennzeichnet,**
**dass** die Insassenerfassungsmittel (12) bestimmen, ob ein Insasse in dem Insassenteilraum (13) vorhanden ist, wenn eine Anstiegsrate pro Zeiteinheit der Kohlendioxydkonzentration (Cx), welche von den Mitteln (14) zur Erfassung der Kohlendioxydkonzentration erfasst wird, größer als ein Anstiegsratenschwellenwert (C2) ist; und
**dass** Überwachungssteuermittel (16) vorhanden sind, wobei, wenn ein Motorschalter (17) des Fahrzeugs AUS ist und die Insassenerfassungsmittel (12) erfassen, dass ein Insasse vorhanden ist, die Überwachungssteuermittel (16) bestimmen, ob die Kohlendioxydkonzentration (Cx), welche durch die Mittel (14) zur Erfassung der Kohlendioxydkonzentration erfasst wird, größer als ein Referenzwert (C1) ist, und wobei, wenn die Kohlendioxydkonzentration (Cx) größer als der Referenzwert (C1) ist, die Überwachungssteuermittel (16) die Warnmittel (15) veranlassen, eine Warnung auszugeben.

2. Zustandserfassungsvorrichtung (10) für einen Insassenteilraum (13) eines Fahrzeugs, umfassend:
lnsassenerfassungsmittel (12), welche erfassen, ob ein Insasse in dem Insassenteilraum (13) vorhanden ist;
Mittel (14) zur Erfassung der Kohlendioxydkonzentration, welche eine Konzentration (Cx) von Kohlendioxyd in dem Insassenteilraum (13) erfassen; und
Belüftungsmittel (20), welche den Insassenteilraum (13) belüften,
**dadurch gekennzeichnet,**
**dass** die Insassenerfassungsmittel (12) bestimmen, ob ein Insasse in dem Insassenteilraum (13) vorhanden ist, wenn eine Anstiegsrate pro Zeiteinheit der Kohlendioxydkonzentration (Cx), welche durch die Mittel (14) zur Erfassung der Kohlendioxydkonzentration erfasst wird, größer als ein Anstiegsratenschwellenwert (C2) ist; und
**dass** Überwachungssteuermittel (16) vorhanden sind, wobei, wenn ein Motorschalter (17) AUS ist und die Insassenerfassungsmittel (12) erfassen, dass ein Insasse vorhanden ist, die Überwachungssteuermittel (16) bestimmen, ob die Kohlendioxydkonzentration (Cx), welche durch die Mittel (14) zur Erfassung der Kohlendioxydkonzentration erfasst wird, größer als ein Referenzwert (C1) ist, und wobei, wenn die Kohlendioxydkonzentration (Cx) größer als der Referenzwert (C1) ist, die Überwachungssteuermittel (16) die Belüftungsmittel (20) veranlassen, den Insassenteilraum (13) zu belüften.

3. Zustandserfassungsvorrichtung (10) für einen Insassenteilraum (13) eines Fahrzeugs, umfassend:
Insassenerfassungsmittel (12), welche erfassen, ob ein Insasse in dem Insassenteilraum (13) vorhanden ist;
Mittel (14) zur Erfassung der Kohlendioxydkonzentration, welche eine Konzentration (Cx) von Kohlendioxyd in dem Insassenteilraum (13) erfassen;
Warnmittel (15), welche eine Warnung ausgeben; und
Belüftungsmittel (20), welche den Insassenteilraum (13) belüften,
**dadurch gekennzeichnet,**
**dass** die Insassenerfassungsmittel (12) bestimmen, ob ein Insasse in dem Insassenteilraum (13) vorhanden ist, wenn eine Anstiegsrate pro Zeiteinheit der Kohlendioxydkonzentration (Cx), welche durch die Mittel (14) zur Erfassung der Kohlendioxydkonzentration erfasst wird, größer als ein Anstiegsratenschwellenwert (C2) ist; und
**dass** Überwachungssteuermittel (16) vorhanden sind, wobei, wenn ein Motorschalter (17) AUS ist und die Insassenerfassungsmittel (12) erfassen, dass ein Insasse vorhanden ist, die Überwachungssteuermittel (16) bestimmen, ob die Kohlendioxydkonzentration (Cx), welche durch die Mittel (14) zur Erfassung der Kohlendioxydkonzentration erfasst wird, größer als ein Referenzwert (C1, C2) ist, und wobei, wenn die Kohlendioxydkonzentration (Cx) größer als der Referenzwert (C1, C2) ist, die Überwachungssteuermittel (16) die Warnmittel (15) veranlassen, ein Geräusch auszugeben, und die Belüftungsmittel (20) veranlassen, den Insassenteilraum (13) zu belüften.

4. Zustandserfassungsvorrichtung (10) für einen Insassenteilraum (13) eines Fahrzeugs nach einem der Ansprüche 1 bis 3, **gekennzeichnet durch** Vorrichtungssteuermittel, welche die Mittel (14) zur Erfassung der Kohlendioxydkonzentration aktivieren, wenn die Insassenerfassungsmittel (12) erfassen, dass ein Insasse vorhanden ist.

## Revendications

1. Appareil de surveillance d'état (10) pour un compartiment passager de véhicule (13), comprenant :
des moyens de détection d'occupant (12), détectant si un occupant est présent dans le compartiment passager de véhicule (13) ;
des moyens de détection de concentration en dioxyde de carbone (14), détectant une concentration (Cx) en dioxyde de carbone dans le compartiment passager de véhicule (13) ; et
des moyens d'avertissement (15), fournissant un avertissement,
**caractérisé en ce que**
les moyens de détection d'occupant (12) déterminent si un occupant est présent dans le compartiment à passager (13), si un taux d'augmentation, par unité de temps, de la concentration (Cx) en dioxyde de carbone, détectée par les moyens de détection de concentration en dioxyde de carbone (14), est supérieur à une valeur seuil de taux d'augmentation (C2) ; et
des moyens de commande de surveillance (16) sont prévus, dans lequel, lorsqu'un interrupteur de moteur thermique (17) du véhicule est sur ARRET et que les moyens de détection d'occupant (12) détectent qu'un occupant est présent, les moyens de commande de surveillance (16) déterminent si la concentration (Cx) en dioxyde de carbone, détectée par les moyens de détection de concentration en dioxyde de carbone (14), est supérieure à une valeur de référence (C1), et dans lequel, si la concentration (Cx) en dioxyde de carbone est supérieure à la valeur de référence (C1), les moyens de commande de surveillance (16) provoquent la fourniture d'un avertissement par les moyens d'avertissement (15).

2. Appareil de surveillance d'état (10) pour un compartiment passager de véhicule (13), comprenant :
des moyens de détection d'occupant (12), détectant si un occupant est présent dans le compartiment passager de véhicule (13) ;
des moyens de détection de concentration en dioxyde de carbone (14), détectant une concentration (Cx) en dioxyde de carbone dans le compartiment passager de véhicule (13) ; et
des moyens de ventilation (20), ventilant le compartiment passager de véhicule (13),
**caractérisé en ce que**
les moyens de détection d'occupant (12) déterminent si un occupant est présent dans le compartiment à passager (13), si un taux d'augmentation, par unité de temps, de la concentration (Cx) en dioxyde de carbone, détectée par les moyens de détection de concentration en dioxyde de carbone (14), est supérieur à une valeur seuil de taux d'augmentation (C2) ; et
des moyens de commande de surveillance (16) sont prévus, dans lequel, lorsqu'un interrupteur de moteur thermique (17) du véhicule est sur ARRET et que les moyens de détection d'occupant (12) détectent qu'un occupant est présent, les moyens de commande de surveillance (16) déterminent si la concentration (Cx) en dioxyde de carbone, détectée par les moyens de détection de concentration en dioxyde de carbone (14), est supérieure à une valeur de référence (C1), et dans lequel, si la concentration (Cx) en dioxyde de carbone est supérieure à une valeur de référence (C1), les moyens de commande de surveillance (16) provoquent la ventilation du compartiment à passager (13) par les moyens de ventilation (20).

3. Appareil de surveillance d'état (10) pour un compartiment passager de véhicule (13), comprenant :
des moyens de détection d'occupant (12), détectant si un occupant est présent dans le compartiment passager de véhicule (13) ;
des moyens de détection de concentration en dioxyde de carbone (14), détectant une concentration (Cx) en dioxyde de carbone dans le compartiment passager de véhicule (13) ; et
des moyens d'avertissement (15), fournissant un avertissement ; et
des moyens de ventilation (20), ventilant le compartiment passager de véhicule (13),
**caractérisé en ce que**
les moyens de détection d'occupant (12) déterminent si un occupant est présent dans le compartiment à passager (13), si un taux d'augmentation, par unité de temps, de la concentration (Cx) en dioxyde de carbone, détectée par les moyens de détection de concentration en dioxyde de carbone (14), est supérieur à une valeur seuil de taux d'augmentation (C2) ; et
des moyens de commande de surveillance (16) sont prévus, dans lequel, lorsqu'un interrupteur de moteur thermique (17) du véhicule est sur ARRET et que les moyens de détection d'occupant (12) détectent qu'un occupant est présent, les moyens de commande de surveillance (16) déterminent si la concentration (Cx) en dioxyde de carbone, détectée par les moyens de détection de concentration en dioxyde de carbone (14), est supérieure à une valeur de référence (C1, C2), et dans lequel, si la concentration (Cx) en dioxyde de carbone est supérieure à la valeur de référence (C1, C2), les moyens de commande de surveillance (16) provoquent l'émission d'un son par les moyens d'avertissement (15), et provoquent la ventilation du compartiment à passager (13) par les moyens de ventilation (20).

4. Appareil de surveillance d'état (10) pour un compartiment passager de véhicule (13) selon l'une quelconque des revendications 1 à 3, **caractérisé par** des moyens de commande de dispositif, activant les moyens de détection de concentration en dioxyde de carbone (14) lorsque les moyens de détection d'occupant (12) détectent qu'un occupant est présent.
